# EUROPÄISCHE PATENTANMELDUNG

(11) **EP 4 603 215 A1**
(43) Veröffentlichungstag der Anmeldung: **20.08.2025**
(21) Anmeldenummer: 24157850.9
(22) Anmeldetag: 15.02.2024
(51) Int. Cl.: B23B 27/10, B23B 29/04, B23B 27/08

(54) **ZERSPANUNGSSTECHWERKZEUG**

(71) Anmelder: CERATIZIT Austria Gesellschaft m.b.H., 6600 Reutte (AT)
(72) Erfinder: GOEBERL, Christian, 6600 Reutte (AT); MARTH, Noel, 6600 Reutte (AT)
(74) Vertreter: Ciesla, Dirk

(57) **Zusammenfassung**

Zerspanungsstechwerkzeug (1, 61, 65) umfassend eine Stechplatte (5), einen Grundkörper (3) und eine sich zumindest abschnittsweise in dem Grundkörper (3) erstreckende Kanalstruktur (10), wobei die Stechplatte (5) an dem Grundkörper (3) gehaltert ist und einen Schneidenbereich (6) mit einer freistehenden Stirnschneidkante (7) und einer dieser zugeordneten Spanfläche (29) und stirnseitigen Freifläche (19) aufweist, wobei der Grundkörper (3) von vorn aufseiten der Freifläche (19) nach hinten, längs der Stirnschneidkante (7) seitlich und von oben aufseiten der Spanfläche (29) nach unten erstreckt ist, wobei die Kanalstruktur (10) einen Spülungskanal (11) aufweist, der seitlich neben die Stechplatte (5) zielend und zum zumindest komponentenmäßig nach vorn gerichteten Flüssigkeitsaustritt erstreckt und durch eine Spülungsöffnung (12) seitlich neben der Stechplatte (5) geöffnet ist.

## Beschreibung

Die vorliegende Erfindung betrifft ein Zerspanungsstechwerkzeug und dessen Verwendung.

EP 2 691 202 A1 zeigt ein Werkzeug zur spanenden Bearbeitung eines Werkstücks mit einem Schneideinsatz mit einer Schneide und einem Halter mit einem im Bereich der werkstückseitigen Stirnseite des Halters angeordneten Schneideinsatzaufnahme, in dem der Schneideinsatz angeordnet ist, wobei in dem Halter eine Kühlmittelbohrung angeordnet ist, die in einen Kühlmittelaustritt mündet, der an der werkstückseitigen Stirnseite des Halters seitlich neben der Schneideinsatzaufnahme angeordnet und so ausgerichtet ist, dass Kühlmittel in Richtung des Schneideinsatzes austritt.

Das in der EP 2 691 202 A1 gezeigte Werkzeug kann dazu verwendet werden, mehrere zueinander versetzte Nuten in ein relativ zu diesem Werkzeug drehendes Werkstück zu erzeugen. Dabei tritt aber ein Problem auf. Beim Einstechen entstehen Späne, die sich üblicherweise in den Nuten festsetzen, und so die Funktionalität des bearbeiteten Werkstücks beeinträchtigen. Diese festgesetzten Späne müssen folglich in einem separaten Schritt mechanisch aus den Nuten entfernt werden, wobei das Risiko verbleibt, dass nicht alle Späne erkannt werden und/oder die Oberfläche der Nut beschädigt wird, dies umso mehr bei schmalen Stechbreiten und/oder großen Nuttiefen.

Die Aufgabe der vorliegenden Erfindung ist es daher, ein Zerspanungsstechwerkzeug mit einer verbesserten Spanentfernungsfunktion und dessen Verwendung zur verbesserten Spanentfernung bereitzustellen.

Die Aufgabe wird durch ein Zerspanungsstechwerkzeug nach Anspruch 1 gelöst. Vorteilhafte Weiterbildungen sind den von Anspruch 1 abhängigen Ansprüchen, die untereinander frei kombinierbar sind, zu entnehmen.

Das Zerspanungsstechwerkzeug umfasst eine Stechplatte, einen Grundkörper und eine sich zumindest abschnittsweise in dem Grundkörper erstreckende Kanalstruktur, wobei die Stechplatte an dem Grundkörper gehaltert ist und einen Schneidenbereich mit einer freistehenden Stirnschneidkante und einer dieser zugeordneten Spanfläche und stirnseitigen Freifläche aufweist, wobei der Grundkörper von vorn aufseiten der Freifläche nach hinten, längs der Stirnschneidkante seitlich und von oben aufseiten der Spanfläche nach unten erstreckt ist, wobei die Kanalstruktur einen Spülungskanal aufweist, der seitlich neben die Stechplatte zielend und zum zumindest komponentenmäßig nach vorn gerichteten Flüssigkeitsaustritt erstreckt und durch eine Spülungsöffnung seitlich neben der Stechplatte geöffnet ist.

Das Zerspanungsstechwerkzeug ist zur Erzeugung einer Nut durch üblicherweise radiales Einstechen mit der Stechplatte aufseiten des Schneidenbereichs in eine relativ zu dem Zerspanungsstechwerkzeug bezüglich einer Drehachse drehende Welle ausgebildet.

Der Grundkörper ist üblicherweise aus einem Stahl hergestellt, kann einteilig oder mehrteilig ausgebildet sein, und weist üblicherweise einen Klemmkopf auf, wobei der Klemmkopf üblicherweise eine Aufnahmetasche, einen in die Aufnahmetasche mündenden Klemmspalt, der sich üblicherweise längs zur Stirnschneidkante und damit seitlich erstreckt, ein unteres Klemmteil und ein oberes Klemmteil und einen Grundkörpersteg aufweist, wobei die Stechplatte dann üblicherweise in der Aufnahmetasche eingeklemmt und damit zwischen dem oberen Klemmteil und dem unteren Klemmteil angeordnet und so gehaltert ist. Das obere Klemmteil ist üblicherweise mit dem unteren Klemmteil durch den Grundkörpersteg schwenkbar verbunden und durch den Klemmspalt und die Aufnahmetasche von dem unteren Klemmteil getrennt. Wird der Klemmspalt aufgeweitet, schwenkt das obere Klemmteil nach oben üblicherweise elastisch aus, so dass ab einem gewissen Ausschwenken die Stechplatte aus der Aufnahmetasche entfernt werden kann. Wird der Klemmspalt verengt, schwenkt das obere Klemmteil nach unten üblicherweise elastisch ein, so dass ab einem gewissen Einschwenken die Stechplatte vorgespannt gehaltert ist, wonach die Stechplatte auf dem unteren Klemmteil aufliegt und durch das obere Klemmteil gegen das untere Klemmteil gepresst wird.

Der Spülungskanal kann direkt in dem Grundkörper ausgebildet und durch die Spülungsöffnung seitlich neben der Stechplatte geöffnet sein.

Indem die Stechplatte an dem Grundkörper gehaltert ist, ist die Stechplatte üblicherweise reversibel lösbar mit dem Grundkörper verbunden, üblicherweise indem die Stechplatte in dem üblicherweise vorhandenen Aufnahmetasche eingeklemmt eingeordnet ist.

Die Spanfläche ist zum über sie ablaufenden Kontakt durch die Stirnschneidkante beim Einstechen erzeugter Späne ausgebildet.

Die Stirnschneidkante wird durch einen Übergang von der Freifläche in die Spanfläche gebildet.

Üblicherweise weist der Schneidenbereich zwei beidseits an die Stirnschneidkante durch jeweils eine Schneidecke des Schneidenbereichs angeschlossene Nebenschneiden auf, die sich jeweils zumindest komponentenmäßig nach hinten erstrecken. Der Schneidenbereich ist also in Aufsicht auf die Spanfläche, also in Blickrichtung von oben nach unten, üblicherweise bezüglich seiner Schneiden U-förmig ausgebildet.

Der Schneidenbereich ragt üblicherweise längs der Stirnschneidkante beidseits dieser über einen an den Schneidenbereich angeschlossenen hinteren Bereich der Stechplatte hinaus, wodurch beim Stechen nur der Schneidenbereich, stirnseitig und seitlich dazu, die Welle beim Einstechen kontaktiert.

Die Stechplatte ist üblicherweise aus einem Hartmetall (Englisch *cemented carbide*) hergestellt.

Die Stechplatte ist ferner üblicherweise in Richtung von vorn nach hinten längs erstreckt, längs der Stirnschneidkante in die Breite erstreckt und von oben nach unten in die Höhe erstreckt. Üblicherweise ist die Längenerstreckung größer als die Breite und Höhe. Üblicherweise ist die Breite kleiner als die Längserstreckung und Höhe.

Der Stechplatte ist ferner üblicherweise oben aufseiten der Spanfläche eine Oberseite, gegenüberliegend von der Oberseite eine Unterseite, aufseiten der Freifläche eine Stirnseite, gegenüberliegend von der Stirnseite eine Rückseite und seitlich jeweils eine rechte Seite und eine linke Seite zugeordnet. Die Oberseite ist dann mit der Unterseite durch jeweils die Stirnseite, Rückseite, linke Seite und rechte Seite verbunden.

Die Stechplatte ist dem Grundkörper analog von vorn aufseiten der Freifläche nach hinten, längs der Stirnschneidkante seitlich und von oben aufseiten der Spanfläche nach unten erstreckt.

Wenn nicht ausdrücklich anders offenbart, ist mit "längs der Stirnschneidkante" eine Erstreckung entlang einer Stirnschneidkantenlinie gemeint, die die beiden seitlich äußersten Punkte der Stirnschneidkante miteinander verbindet, also dort, wo die Stirnschneidkante mit den üblicherweise vorhandenen Schneidecken verbunden ist. Die Stirnschneidkante folgt der Stirnschneidkantenlinie üblicherweise im Wesentlichen, im Falle einer vollständig geraden Erstreckung gänzlich.

Wenn nicht ausdrücklich anders offenbart, ist mit "quer zur Stirnschneidkante" eine Erstreckung quer zur Stirnschneidkantenlinie unter einem Winkel von 80° bis 100°, üblicherweise 85° bis 95°, gemeint.

Indem die Kanalstruktur zumindest abschnittsweise in dem Grundkörper erstreckend ausgebildet ist, ist die Kanalstruktur zumindest insoweit von außen betrachtet und außerhalb von etwaigen, der Kanalstruktur zugeordneten Öffnungen, nicht ersichtlich. Die Kanalstruktur kann vollständig in dem Grundkörper erstreckend ausgebildet sein.

Indem der Grundkörper von oben aufseiten der Spanfläche nach unten erstreckt ist, ist dem Grundkörper aufseiten der Spanfläche eine Oberseite und gegenüberliegend der Oberseite eine Unterseite zugeordnet.

Indem der Grundkörper von vorn aufseiten der Freifläche nach hinten erstreckt ist, ist dem Grundkörper vorn aufseiten der Freifläche eine Stirnseite und hinten gegenüberliegend von der Stirnseite eine Rückseite zugeordnet. Dem Grundkörper ist eine Stechbewegung entlang einer quer zur Stirnschneidkante längserstreckt ausgerichteten und diese üblicherweise mittig durchstoßende Stechachse zuordenbar, wobei sich die Stechachse von vorn nach hinten erstreckt, wobei unter der Stechbewegung der Grundkörper entlang der Stechachse mit dem Schneidenbereich voran relativ auf ein einzustechendes Werkstück bewegbar ist. Der Grundköper hat üblicherweise einen Schaft zum Einspannen in eine Werkzeughalterung, wobei der Schaft längs oder quer zur Stechachse längserstreckt sein kann und üblicherweise einen im Querschnitt verrundeten oder eckigen Schaftquerschnitt aufweist.

Indem der Spülungskanal zum zumindest komponentenmäßig nach vorn gerichteten Flüssigkeitsaustritt erstreckt und durch die Spülungsöffnung seitlich neben der Stechplatte geöffnet ist, kann ein aus der Spülungsöffnung und damit aus dem Spülungskanal austretbarer Flüssigkeitsstrom zumindest komponentenmäßig der Stechbewegung folgen.

Indem der Grundkörper längs der Stirnschneidkante seitlich erstreckt ist, ist dem Grundkörper eine linke Seite und eine rechte Seite quer zur Stechachse zuordenbar, wobei die Stechplatte zwischen der linken und rechten Seite angeordnet ist und der Spülungskanal damit rechts oder links von der Stechplatte durch die Spülungsöffnung geöffnet ist.

Indem der Spülungskanal neben die Stechplatte zielend ist, wird ein aus dem Spülungskanal und damit aus der Spülungsöffnung austretbarer Flüssigkeitsstrom unter Beibehaltung seiner durch den Spülungskanal aufgeprägten Querschnittsform die Stechplatte gänzlich verfehlen und kann somit frei von Kollisionsstromverlusten bezüglich der Stechplatte zur Bespülung der Nut verwendet werden.

Indem der Spülungskanal seitlich neben die Stechplatte zielend und zum zumindest komponentenmäßig nach vorn gerichteten Flüssigkeitsaustritt erstreckt und durch die Spülungsöffnung seitlich neben der Stechplatte geöffnet ist, ist ein aus der Spülungsöffnung und damit aus dem Spülungskanal austretbarer Flüssigkeitsstrom unter Beibehaltung seiner durch den Spülungskanal aufgeprägten Querschnittsform auf der rechten oder linken Seite der Schneidplatte von dieser angeordnet und beabstandet, so dass der Flüssigkeitsstrom damit in eine seitlich neben dem Schneidenbereich versetzte Nut längs deren Tiefenerstreckung eintreten und auf diese Weise den Schneidenbereich umspülen kann.

Indem der Spülungskanal seitlich neben die Stechplatte zielend und zum zumindest komponentenmäßig nach vorn gerichteten Flüssigkeitsaustritt erstreckt und durch die Spülungsöffnung seitlich neben der Stechplatte geöffnet ist, wird ein aus der Spülungsöffnung und damit aus dem Spülungskanal austretbarer Flüssigkeitsstrom unter Beibehaltung seiner durch den Spülungskanal aufgeprägten Querschnittsform die Stechplatte gänzlich verfehlen, der Richtung der Stechbewegung zumindest komponentenmäßig folgen und in Aufsicht auf die Spanfläche seitlich neben dem Schneidenbereich und beabstandet zur Stechplatte verlaufen und aus dem Zerspanungsstechwerkzeug beziehungsweise üblicherweise aus dem Grundkörper aufseiten der Stechplatte austreten und solchermaßen ausgerichtet in eine seitlich zum Schneidenbereich beabstandete Nut eintreten.

Der Fachmann versteht die Anordnung und Ausrichtung des Spülungskanals so, dass ein aus dem Spülungskanal und damit aus der Spülungsöffnung austretbarer Flüssigkeitsstrom in eine durch den Schneidenbereich erzeugte Nut eintreten kann.

Die technische Wirkung des Spülungskanals und der Spülungsöffnung liegen damit darin, dass eine seitlich neben dem Schneidenbereich und damit seitlich zur Stirnschneidkante versetzte Nut aufseiten der Spülungsöffnung mit einem aus dem Spülungskanal austretbaren Flüssigkeitsstrom gespült werden kann, so dass in dieser Nut befindliche Späne aus dieser flüssigkeitsbeaufschlagt entfernt werden können, während der Schneidenbereich zugleich eine gegenüber der gespülten Nut weitere Nut erzeugen kann.

Das Zerspanungsstechwerkzeug hat durch den Spülungskanal eine Nutspülfunktion, die für das Spülen einer seitlich neben dem Schneidenbereich versetzten Nut besonders gut geeignet ist, wobei die Nutspülfunktion durch ein Durchfluten des Spülungskanals in Richtung auf die Spülungsöffnung aktiviert wird.

Gemäß einer Weiterbildung ist die Spülungsöffnung seitlich neben dem Schneidenbereich von diesem unter einem Versatzabstand beabstandet, wobei der Versatzabstand zumindest eine durch den Schneidenbereich definierte Stechbreite beträgt. Indem die Spülungsöffnung seitlich neben dem Schneidenbereich bemessen, also längs der Stirnschneidkante, unter dem Versatzabstand beabstandet ist, können solche durch den Schneidenbereich bereits erzeugte Nuten beim Einstechen des Zerspanungsstechwerkzeugs besonders gut gespült werden, deren Stegbreite, also die zwischen zwei benachbarten Nuten quer zu ihrer Tiefenerstreckung bemessene Wandungsdicke, dem Versatzabstand betragsmäßig entsprechen.

Gemäß einer Weiterbildung ist der Spülungskanal quer zur Stirnschneidkante längserstreckt ausgebildet. Indem der Spülungskanal quer zur Stirnschneidkante längserstreckt ist, ist der Spülungskanal durch eine Bohrung, insbesondere eine Bohrung in dem Grundkörper, besonders einfach und damit kostengünstig herstellbar und zugleich präzise ausrichtbar.

Gemäß einer Weiterbildung ist der Spülungskanal zum komponentenmäßig nach vorn und komponentenmäßig nach oben gerichteten Flüssigkeitsaustritt erstreckt und durch die Spülungsöffnung seitlich neben der Stechplatte geöffnet. Die relative Bahngeschwindigkeit einer relativ drehenden Welle und die relative Strömungsgeschwindigkeit des Flüssigkeitsstroms, der aus der Spülungsöffnung und damit dem Spülungskanal austritt, sind zueinander entgegengesetzt ausrichtbar, wenn der Spülungskanal zum komponentenmäßig nach vorn und komponentenmäßig nach oben gerichteten Flüssigkeitsaustritt erstreckt und durch die Spülungsöffnung seitlich neben der Stechplatte geöffnet, wodurch Späne mit einer bezüglich der Nut vergrößerten Spülungsgeschwindigkeit ausgespült werden können.

Gemäß einer Weiterbildung weist die Kanalstruktur einen weiteren Spülungskanal auf, der neben die Stechplatte zielend und zum zumindest komponentenmäßig nach vorn gerichteten Flüssigkeitsaustritt erstreckt und durch eine weitere Spülungsöffnung seitlich neben der Stechplatte geöffnet ist. Der weitere Spülungskanal vergrößert den durch das Zerspanungsstechwerkzeug bespülbaren Bereich möglicher Nuten und/oder unterstützt den Spülungskanal beim Bespülen einer Nut. Üblicherweise ist der weitere Spülungskanal quer zur Stirnschneidkante längserstreckt ausgerichtet.

Gemäß einer Weiterbildung ist der weitere Spülungskanal zum komponentenmäßig nach vorn und komponentenmäßig nach unten gerichteten Flüssigkeitsaustritt erstreckt und durch die weitere Spülungsöffnung geöffnet. Indem der Spülungskanal zum komponentenmäßig nach vorn und komponentenmäßig nach oben gerichteten Flüssigkeitsaustritt erstreckt und durch die Spülungsöffnung seitlich neben der Stechplatte geöffnet und der weitere Spülungskanal zum komponentenmäßig nach vorn und komponentenmäßig nach unten gerichteten Flüssigkeitsaustritt erstreckt und durch die weitere Spülungsöffnung seitlich neben der Stechplatte geöffnet sind, sind die Flüssigkeitsströme bezüglich der nach oben und unten gerichteten Komponenten bezüglich des Spülungskanals und des weiteren Spülungskanals entgegengesetzt zueinander ausgerichtet, so dass solche Späne, die bezüglich einer Bespülung durch den Spülungskanal ungünstig in einer Nut verklemmt sind, durch eine Bespülung durch den weiteren Spülungskanal losgelöst werden können, oder umgekehrt.

Gemäß einer Weiterbildung ist der Schneidenbereich zwischen der Spülungsöffnung und der weiteren Spülungsöffnung angeordnet. Dadurch können bei einer seitlichen Versatzbewegung des Zerspanungsstechwerkzeugs, durch welche das Zerspanungsstechwerkzeug in eine neue Einstechposition bringbar ist, bezüglich dieser Versatzbewegung voreilende und nacheilende Nuten gespült werden.

Gemäß einer Weiterbildung ist die weitere Spülungsöffnung seitlich neben dem Schneidenbereich von diesem unter einem weiteren Versatzabstand beabstandet, wobei der weitere Versatzabstand zumindest die Stechbreite beträgt. Dadurch realisiert der weitere Versatzabstand die bezüglich des Versatzabstands beschriebenen Wirkungen und Vorteile in gleicherweise.

Gemäß einer Weiterbildung sind der Versatzabstand und der weitere Versatzabstand betragsmäßig verschieden. Das Zerspanungsstechwerkzeug kann dadurch zur Bespülung von Nuten, zwischen denen Stege mit einer dem Versatzabstand oder dem weiteren Versatzabstand entsprechenden Stegbreite vorhanden sind, gleichermaßen verwendet werden.

Gemäß einer Weiterbildung weist die Kanalstruktur einen noch weiteren Spülungskanal auf, der neben die Stechplatte zielend und zum komponentenmäßig nach vorn und komponentenmäßig nach oben oder unten gerichteten Flüssigkeitsaustritt erstreckt und durch eine noch weitere Spülungsöffnung seitlich neben der Stechplatte geöffnet ist. Durch den noch weiteren Spülungskanal wird die Spülfunktionalität des Zerspanungsstechwerkzeugs noch weiter erhöht, zum Beispiel hinsichtlich der Breite, Position, Tiefe und/oder Stegbreite spülbarer Nuten. Der noch weitere Spülungskanal ist üblicherweise quer zur Stirnschneidkante längserstreckt ausgerichtet.

Gemäß einer Weiterbildung ist der Spülungskanal bezüglich seiner Orientierung an dem Grundkörper irreversibel fixiert. Dadurch ist der Spülungskanal bezüglich der durch ihn bereitgestellten vorteilhafte Spülungsfunktion gegenüber einer manuellen oder einer mit einem Bauteil bedingten Manipulation fixiert, üblicherweise indem der Spülungskanal gänzlich in dem Grundkörper erstreckt ist.

Gemäß einer Weiterbildung weist die Kanalstruktur einen Spanflächenrichtkanal auf, der oberhalb von der Spanfläche angeordnet und zur zumindest bereichsweisen Spanflächenspülung erstreckt und geöffnet ist. Der Spanflächenrichtkanal kann dafür sorgen, dass die Spanfläche beim Einstechen mit einer Flüssigkeit gespült wird, um die Stechplatte in diesem Bereich zu kühlen. Der Spanflächenrichtkanal ist auf die Stechplatte zielend.

Gemäß einer Weiterbildung weist die Kanalstruktur einen Freiflächenrichtkanal auf, der unterhalb von der Spanfläche angeordnet zur zumindest bereichsweisen Freiflächenspülung erstreckt und geöffnet ist. Der Freiflächenrichtkanal kann dafür sorgen, dass die Freifläche beim Einstechen mit einer Flüssigkeit gespült wird, um die Stechplatte in diesem Bereich zu kühlen. Der Freiflächenrichtkanal ist auf die Stechplatte zielend.

Gemäß einer Weiterbildung ist die Spülungsöffnung oberhalb oder unterhalb von der weiteren Spülungsöffnung angeordnet. Die Spülungsöffnung und die weitere Spülungsöffnung sind dadurch zueinander höhenversetzt.

Die Aufgabe wird durch eine Verwendung eines Zerspanungsstechwerkzeugs nach den beigefügten Ansprüchen und dessen beschriebenen Weiterbildungen gelöst, indem das Zerspanungsstechwerkzeug zur Spülung einer seitlich neben dem Schneidenbereich versetzen Wellennut einer Welle verwendet wird. Die Wellennut befindet sich dabei auf der Seite der Spülungsöffnung und wird mit einem aus dem Spülungskanal und damit der Spülungsöffnung austretenden Flüssigkeitsstrom gespült.

Gemäß einer Weiterbildung der Verwendung sticht der Schneidenbereich während der Spülung der Wellennut radial und relativ in die Welle zur Erzeugung einer weiteren Wellennut ein.

Weitere Vorteile und Zweckmäßigkeiten der Erfindung ergeben sich anhand der nachfolgenden Beschreibung von Ausführungsbeispielen unter Bezugnahme auf die beigefügten Figuren.

Von den Figuren zeigen
- Fig. 1:: eine Darstellung eines vorderen Bereichs eines Zerspanungsstechwerkzeugs in Blickrichtung von oben nach unten;
- Fig. 2:: eine Darstellung des in Fig. 1 dargestellten Zerspanungsstechwerkzeugs in Blickrichtung von vorn nach hinten;
- Fig. 3:: eine Darstellung des in Fig. 1 dargestellten Zerspanungsstechwerkzeugs in seitlicher Blickrichtung;
- Fig. 4:: eine Schnittdarstellung des in Fig. 1 dargestellten Zerspanungsstechwerkzeugs gemäß der in Fig. 2 gezeigten Schnittlinie A-A;
- Fig. 5:: eine Schnittdarstellung des in Fig. 1 dargestellten Zerspanungsstechwerkzeugs gemäß der in Fig. 2 gezeigten Schnittlinie B-B;
- Fig. 6:: eine Schnittdarstellung des in Fig. 1 dargestellten Zerspanungsstechwerkzeugs gemäß der in Fig. 2 gezeigten Schnittlinie C-C;
- Fig. 7:: eine Schnittdarstellung des in Fig. 1 dargestellten Zerspanungsstechwerkzeugs gemäß der in Fig. 2 gezeigten Schnittlinie D-D;
- Fig. 8:: eine Schnittdarstellung des in Fig. 1 dargestellten Zerspanungsstechwerkzeugs gemäß der in Fig. 2 gezeigten Schnittlinie E-E;
- Fig. 9:: eine perspektivische Darstellung des in Fig. 1 dargestellten Zerspanungsstechwerkzeugs in Blickrichtung von schräg unten;
- Fig. 10:: eine perspektivische Darstellung des in Fig. 1 dargestellten Zerspanungsstechwerkzeugs in Blickrichtung von schräg oben;
- Fig. 11:: eine perspektivische Darstellung einer in Fig. 1 dargestellten Stechplatte in Blickrichtung von schräg oben;
- Fig. 12:: eine Darstellung eines vorderen Bereichs der in Fig. 11 dargestellten Stechplatte in Blickrichtung von oben nach unten;
- Fig. 13:: eine perspektivische Darstellung eines weiteren Zerspanungsstechwerkzeugs in Blickrichtung von schräg oben;
- Fig. 14:: eine Darstellung eines noch weiteren Zerspanungsstechwerkzeugs in seitlicher Blickrichtung;
- Fig. 15:: eine Darstellung des in Fig. 1 dargestellten Zerspanungsstechwerkzeugs in Blickrichtung von oben nach unten beim Einstechen und Spülen;
- Fig. 16:: eine Darstellung des in Fig. 1 dargestellten Zerspanungsstechwerkzeugs in seitlicher Blickrichtung beim Einstechen und Spülen;
- Fig. 17:: eine perspektivische Darstellung des in Fig. 1 dargestellten Zerspanungsstechwerkzeugs in Blickrichtung von schräg unten mit einem eingesteckten Aufhebelwerkzeug;
- Fig. 18:: eine Schnittdarstellung des in Fig. 17 dargestellten Zerspanungsstechwerkzeugs quer zu einer in Fig. 1 gezeigten Stirnschneidkante.

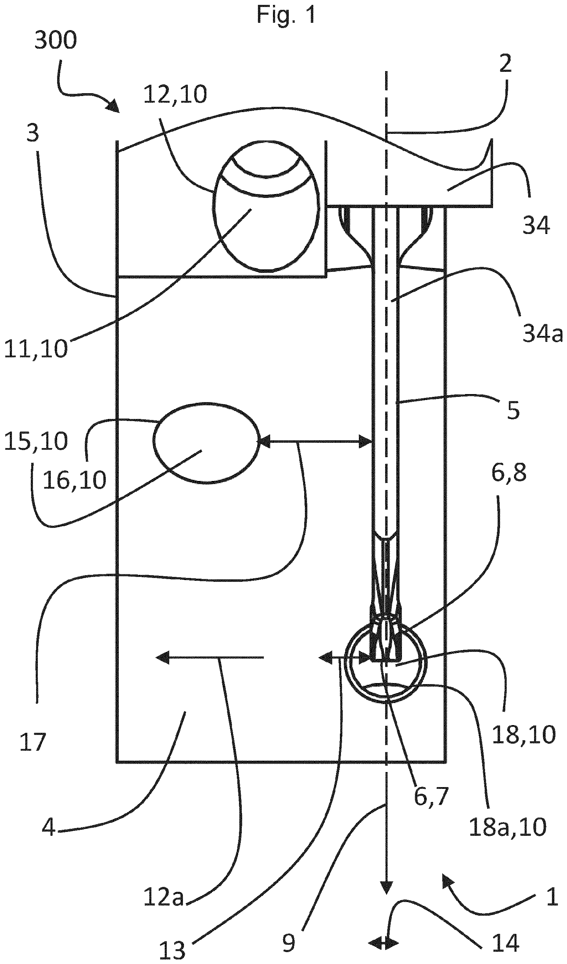

Figur 1 zeigt eine Darstellung in Blickrichtung von oben nach unten eines vorderen Bereichs eines Zerspanungsstechwerkzeugs 1 zur Nuterzeugung durch eine Stechbewegung entlang einer Stechachse 2.

Das Zerspanungsstechwerkzeug 1 umfasst einen Grundkörper 3 mit einer Stirnseite 4. Die Stirnseite 4 wird beim Stechen mit dem Zerspanungsstechwerkzeug 1 auf ein Werkstück zubewegt, wobei sich der Grundkörper 3 entlang der Stechachse 2 von vorn aufseiten der Stirnseite 4 nach hinten längs erstreckt, so dass die Stechachse 2 damit auch als Längsachse des Grundkörpers 3 bezeichnet werden kann.

An dem Grundkörper 3 ist eine Stechplatte 5 im Bereich der Stirnseite 4 eingeklemmt gehaltert. Die Stechplatte 5 weist einen Schneidenbereich 6 mit einer freistehenden und quer zur Stechachse 2 ausgerichteten Stirnschneidkante 7 und beidseits an die Stirnschneidkante7 angeschlossenen Nebenschneiden 8 auf, die sich nach hinten erstrecken und von denen aus Gründen der Übersichtlichkeit nur die in Fig. 1 rechte mit dem Bezugszeichen 8 versehen ist. Der Grundkörper 3 erstreckt sich längs der Stirnschneidkante 7 seitlich von links nach rechts, also quer zur Stechachse 2 seitlich. Die Stirnschneidkante 7 wird von der Stechachse 2 mittig und quer durchstoßen.

Der Stechbewegung ist die Richtung 9 zugeordnet, die parallel zur Stechachse 2 ausgerichtet ist und von der Stechplatte 5 nach vorn weg zeigt.

In dem Grundkörper 3 erstreckt sich eine Kanalstruktur 10, die einen Spülungskanal 11 aufweist. Der Spülungskanal 11 ist quer zur Stirnschneidkante 7 längserstreckend ausgerichtet, neben die Stechplatte 5 zielend und zum zumindest komponentenmäßig nach vorn gerichteten Flüssigkeitsaustritt, also entlang der Richtung 9, erstreckt und durch eine Spülungsöffnung 12 seitlich neben der Stechplatte 5, also exemplarisch in Fig. 1 links von der Stechplatte 5, geöffnet.

Der Spülungskanal 11 ist neben die Stechplatte 3 zielend ausgerichtet, so dass ein aus der Spülungsöffnung 12 austretbarer Flüssigkeitsstrom unter Beibehaltung seiner durch den Spülungskanal 11 aufgeprägten Querschnittsform die Stechplatte 5 gänzlich verfehlt, also zu dieser beabstandet neben dieser strömt.

Die Spülungsöffnung 12 ist seitlich neben dem Schneidenbereich 6 angeordnet, also von dem Schneidenbereich 6 längs der Stirnschneidkante 7 bemessen beabstandet, und zwar unter einem Versatzabstand 13 entlang einer längs zur Stirnschneidkante 7 ausgerichteten Richtung 12a und als kürzester Abstand zwischen der Spülungsöffnung 12 und dem Schneidenbereich 6 längs der Stirnschneidkante 7 bemessen, also quer zur Stechachse 2. Der Versatzabstand 13 beträgt exemplarisch das 1,75-fache der durch den Schneidenbereich 6 definierten Stechbreite 14, also der entlang der Richtung 12a bemessenen maximal durch den Schneidenbereich 6 erzeugbaren Breite einer Nut.

Die Kanalstruktur 10 weist einen weiteren Spülungskanal 15 und eine im Bereich der Stirnseite 4 angeordnete weitere Spülungsöffnung 16 aufseiten der Spülungsöffnung 12 auf, also bezüglich Fig 1 und der Spülungsöffnung 12 weiter links von der Stechplatte 5 entfernt. Der Spülungskanal 15 ist dem Spülungskanal 12 analog quer zur Stirnschneidkante 7 längserstreckend ausgerichtet, neben die Stechplatte 5 zielend und zum zumindest komponentenmäßig nach vorn gerichteten Flüssigkeitsaustritt erstreckt und durch die Spülungsöffnung 16 seitlichen neben der Stechplatte 5 geöffnet.

Die weitere Spülungsöffnung 16 ist der Spülungsöffnung 12 analog längs der Stirnschneidkante 7, also entlang der Richtung 12a, zum Schneidenbereich 6 unter einem dem Versatzabstand 13 analogen weiteren Versatzabstand 17 beabstandet. Der weitere Versatzabstand 17 beträgt betragsmäßig das 3,75-fache von der Stechbreite 14 und ist damit größer als der Versatzabstand 13. Die Versatzabstände 13 und 17 können auch andere Beträge aufweisen, wobei sie aber zumindest die Stechbreite 13 betragen.

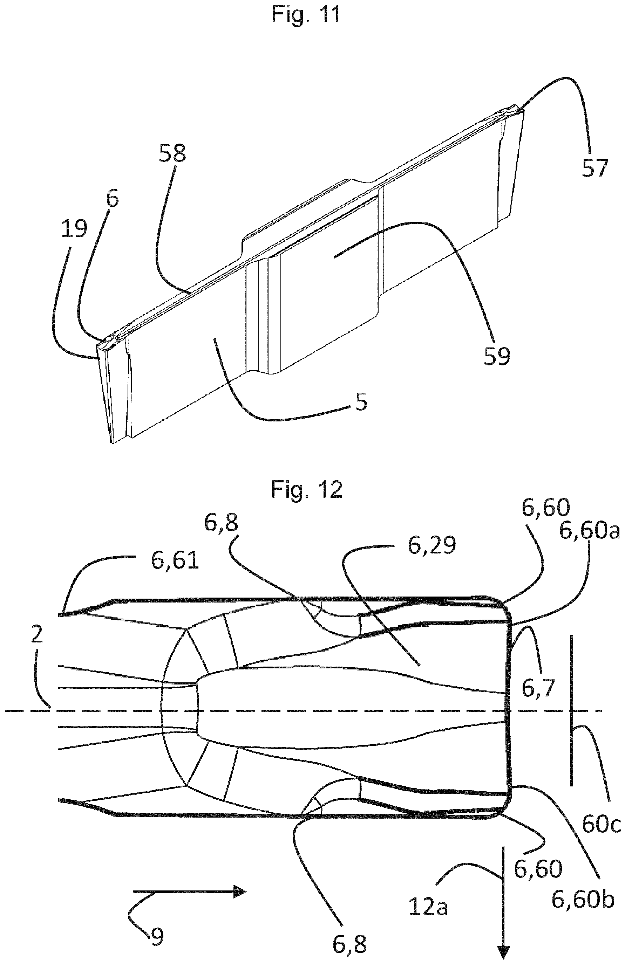

In Fig. 1 ist ferner ersichtlich, dass die Kanalstruktur 10 einen Freiflächenrichtkanal 18 aufweist, der auf die in Fig. 11 ersichtliche stirnseitige Freifläche 19 der Stechplatte 5 gerichtet ist und von einer Freiflächenrichtöffnung 18a quer zur Stirnschneidkante 7 auf die Freifläche 19 und damit auch auf die Stechplatte 5 zielend ausgerichtet ist.

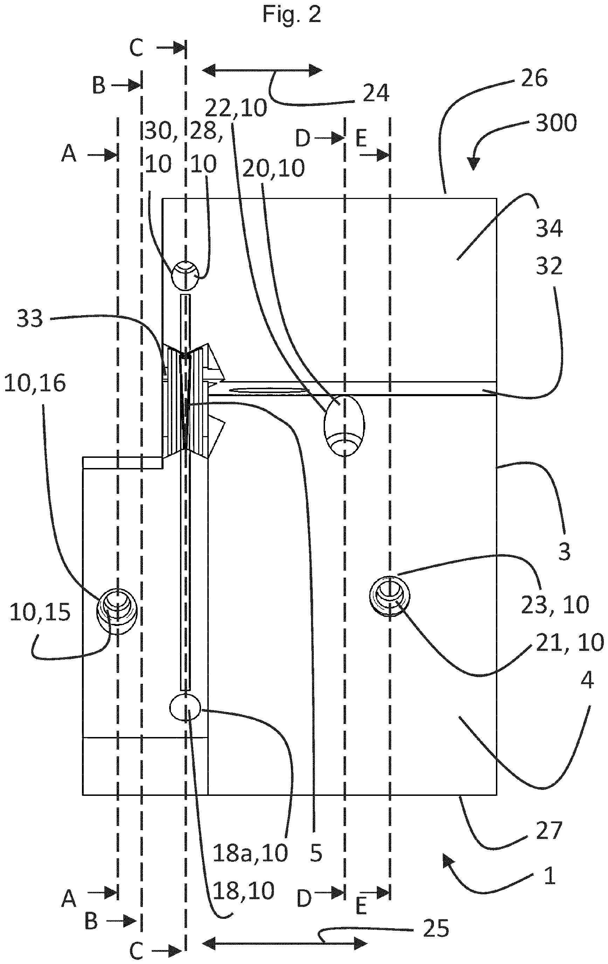

Fig. 2 zeigt eine Darstellung des in Fig. 1 dargestellten Zerspanungsstechwerkzeugs 1 in Blickrichtung von vorn nach hinten entlang der Stechachse 2 und auf die Stirnseite 4.

In Fig. 2 ist ersichtlich, dass die Kanalstruktur 10 zwei weitere Spülungskanäle 20 und 21 aufweist, die jeweils dem Spülungskanal 11 analog quer zur Stirnschneidkante 7 ausgerichtet, neben die Stechplatte 5 zielend und zum zumindest komponentenmäßig nach vorn gerichteten Flüssigkeitsaustritt erstreckt und durch eine Spülungsöffnung 22 beziehungsweise 23 seitlich neben der Stechplatte 5 geöffnet sind, und zwar auf der bezüglich Fig. 2 rechten Seite der Stechplatte 5.

Die Spülungsöffnung 22 ist unter einem dem Versatzabstand 13 analog bemessenen Versatzabstand 24 längs der Stirnschneidkante 5 zum Schneidenbereich 6 beabstandet, der größer als die Stechbreite 14 und exemplarisch größer als jeder der Versatzabstände 13 und 17 ist.

Die Spülungsöffnung 23 ist unter einem dem Versatzabstand 13 analog bemessenen Versatzabstand 25 längs der Stirnschneidkante 5 zum Schneidenbereich 6 beabstandet, der größer als die Stechbreite 14 und exemplarisch größer als der Versatzabstand 24 und größer als jeder der Versatzabstände 13 und 17 ist.

In Fig. 2 ist in Zusammenschau mit Fig 1 ersichtlich, dass die Stechplatte 5 zwischen der Spülungsöffnung 22 und der Spülungsöffnung 11 angeordnet ist. Bezüglich der in Fig. 1 gezeigten Richtung 12a sind damit die Spülungsöffnungen 12 und 16 voreilend und die Spülungsöffnungen 22 und 23 nacheilend angeordnet.

In Fig. 2 ist ersichtlich, dass die Spülungsöffnung 22 näher an einer Oberseite 26 des Grundkörpers 3 angeordnet ist als die Spülungsöffnung 23 und in Zusammenschau mit Fig. 1, dass die Spülungsöffnung 12 näher an der Oberseite 26 angeordnet ist als die Spülungsöffnung 16. Der Grundkörper 3 erstreckt sich dabei von oben aufseiten der in Fig. 12 gezeigten Spanfläche 29 des Schneidenbereichs 6 nach unten, wodurch also die Oberseite 26 oberhalb der Spanfläche 29 angeordnet ist.

Die Oberseite 26 ist gegenüberliegend von einer Unterseite 27 des Grundkörpers 3 angeordnet und die Unterseite 27 unterhalb von der Spanfläche 29. Die Stirnseite 4 erstreckt sich zwischen der Oberseite 26 und der Unterseite 27, also von oben nach unten.

In Fig. 2 ist ferner ersichtlich, dass die Kanalstruktur 10 einen Spanflächenrichtkanal 28 aufweist, der auf die Spanfläche 29 gerichtet ist. Der Spanflächenrichtkanal 28 ist von einer Spanflächenrichtöffnung 30 wegerstreckt, zielt auf die Spanfläche 29 und ist quer zur Stirnschneidkante 7 ausgerichtet.

In Fig. 2 ist außerdem ersichtlich, dass der Grundkörper 3, der exemplarisch einteilig ausgebildet ist, einen Klemmspalt 32 exemplarisch rechts von der Stechplatte 5 aufweist, wobei sich der Klemmspalt 32 seitlich erstreckt und in eine Aufnahmetasche 33 aufseiten der Stechplatte 5 mündet, wobei die Stechplatte 5 in der Aufnahmetasche 33 eingeklemmt angeordnet ist.

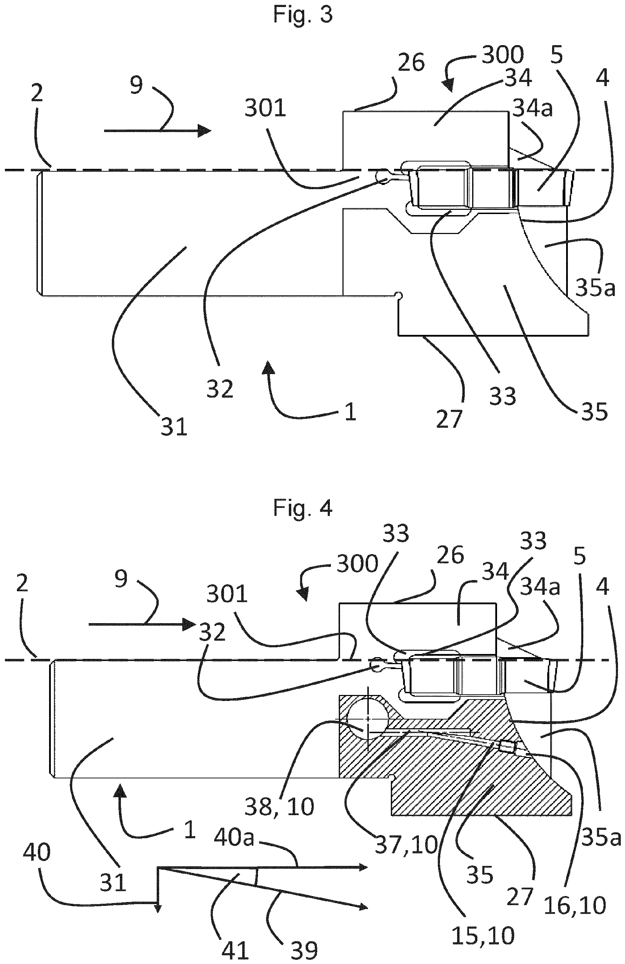

Fig. 3 zeigt eine seitliche Darstellung des Zerspanungsstechwerkzeugs 1 in Blickrichtung der der Schnittlinie A-A in Fig. 2 zugeordneten Pfeile, also auf die bezüglich Fig. 2 linke Seite des Grundkörpers 3.

In Fig. 3 ist ersichtlich, dass der Grundkörper 3 einen exemplarisch eckigen Schaft 31 und einen Klemmkopf 300 aufweist, wobei der Klemmkopf 300 quer zur Stechachse 2 nach oben und nach unten über den Schaft 31 übersteht und der Schaft 31 längs der Stechachse 2 längserstreckt ausgebildet ist.

Der Klemmkopf 300 weist den Klemmspalt 32, die Aufnahmetasche 33, einen oberes Klemmteil 34, ein unteres Klemmteil 35 und hinter der Stechplatte 5 einen Grundkörpersteg 301 auf. Das obere Klemmteil 34 ist mit dem unteren Klemmteil 34 durch den Grundkörpersteg 301 schwenkbar verbunden und durch den Klemmspalt 32 und die Aufnahmetasche 33 von dem unteren Klemmteil 34 getrennt. Wird der Klemmspalt 32 aufgeweitet, schwenkt das obere Klemmteil 34 nach oben elastisch aus, so dass ab einem gewissen Ausschwenken die Stechplatte 5 aus der Aufnahmetasche 33 entfernt werden kann. Wird der Klemmspalt 32 verengt, schwenkt das obere Klemmteil 34 nach unten elastisch ein, so dass ab einem gewissen Einschwenken die Stechplatte 5 vorgespannt gehaltert ist, also so wie in den Figs. 1, 2, 3, 4, 5, 6, 9 und 10 dargestellt, wonach die Stechplatte 5 auf dem unteren Klemmteil 35 aufliegt und durch das obere Klemmteil 34 gegen das untere Klemmteil 35 gepresst wird.

Das obere Klemmteil 34 hat einen vorderen Klemmteilvorsprung 34a. Der Klemmteilvorsprung 34a kontaktiert die Stechplatte 5 vordersteig aufseiten der Spanfläche 29.

Das untere Klemmteil 35a hat einen vorderen Klemmteilvorsprung 35a. Der Klemmteilvorsprung 35a kontaktiert die Stechplatte 5 unterseitig gegenüberliegend von der Spanfläche 29, sodass die Stechplatte 5 im Längserstreckungsbereich des Schneidenbereichs 6 durch des untere Klemmteil 35 abgestützt wird.

Fig. 4 stellt einen quer zur Stirnschneidkante 7 orientierten Querschnitt durch das Zerspanungsstechwerkzeug 1 gemäß der Schnittlinie A-A gemäß Fig. 2 dar.

Fig. 4 zeigt, dass der Spülungskanal 15 zum komponentenmäßig nach vorn und komponentenmäßig nach unten gerichteten Flüssigkeitsaustritt erstreckt und durch die Spülungsöffnung 16 geöffnet ist, so dass der Spülungskanal 15 in dem Querschnitt von Fig. 4 eine Strömungsaustrittsrichtung 39 definiert, die eine Komponente 40 hat, die quer zur Stechachse 2 nach unten zeigt, und eine Komponente 40a hat, die an der Richtung 9 ausgerichtet dementsprechend nach vorn zeigt.

Die Strömungsaustrittsrichtung 39 bildet in dem Querschnitt von Fig. 4 mit der Stechachse 2 einen aufseiten der Unterseite 27 bemessenen Spülungswinkel 41, der kleiner als 90° und größer als 0° ist.

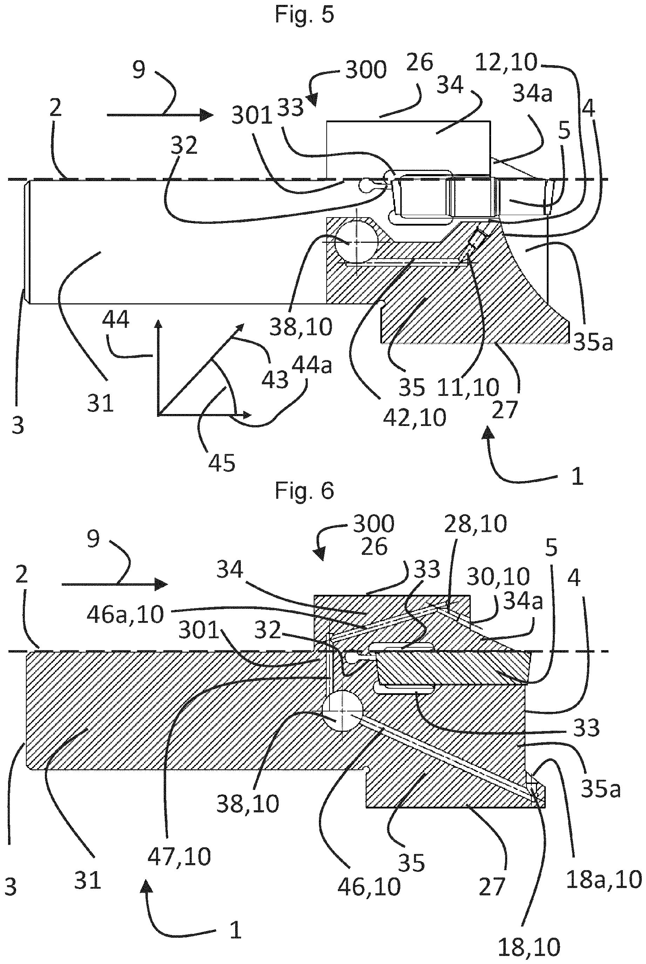

Fig. 5 stellt einen quer zur Stirnschneidkante 7 orientierten Querschnitt durch das Zerspanungsstechwerkzeug 1 gemäß der Schnittlinie B-B gemäß Fig. 2 dar.

Der Spülungskanal 11 ist an einen Einspeisekanal 42 der Kanalstruktur 10 angeschlossen ist. Der Einspeisekanal 42 ist entlang der Stechachse 2 in Richtung von vorn nach hinten erstreckend ausgebildet und an einem längs der Stirnschneidkante 7 orientierten, sich also seitlich längs erstreckenden Verteilungsquerkanal 38 angeschlossen.

Fig. 5 zeigt, dass der Spülungskanal 11 zum komponentenmäßig nach vorn und komponentenmäßig nach oben gerichteten Flüssigkeitsaustritt erstreckt und durch die Spülungsöffnung 12 geöffnet ist, so dass der Spülungskanal 11 in dem Querschnitt von Fig. 5 eine Strömungsaustrittsrichtung 43 definiert, die eine Komponente 44 hat, die quer zur Stechachse 2 nach oben zeigt, und eine Komponente 44a hat, die an der Richtung 9 ausgerichtet dementsprechend nach vorn zeigt.

Die Strömungsaustrittsrichtung 43 bildet in dem Querschnitt von Fig. 5 mit der Stechachse 2 einen Spülungswinkel 45, der aufseiten der Oberseite 26 bemessen kleiner als 90° und größer als 0° ist und von dem Spülungswinkel 41 betragsmäßig verschieden ist, so dass die Gefälle, unter denen sich die Spülungskanäle 15 und 11 erstrecken, zueinander verschieden und wegen der zueinander entgegengesetzten Strömungsrichtungskomponenten 40 und 44 zueinander auch gegenläufig sind.

Der Spülungskanal 11 ist an einen Einspeisekanal 42 angeschlossen. Der Einspeisekanal 42 ist entlang der Stechachse 2 erstreckend ausgebildet und an den Verteilungsquerkanal 38 angeschlossen.

Fig. 6 stellt einen quer zur Stirnschneidkante 7 orientierten Querschnitt durch das Zerspanungsstechwerkzeug 1 gemäß der Schnittlinie C-C gemäß Fig. 2 dar.

Fig. 6 zeigt, dass sich der Freiflächenrichtkanal 18 in dem Querschnitt gemäß Fig. 6 zum nach oben gerichteten Flüssigkeitsaustritt erstreckt und durch die Freiflächenrichtöffnung 18a geöffnet ist, und dass der Spanflächenrichtkanal 28 zum komponentenmäßig nach vorn und komponentenmäßig nach unten gerichteten Flüssigkeitsaustritt erstreckt und durch die Spanflächenrichtöffnung 30 geöffnet ist.

Der Freiflächenrichtkanal 18 ist an einen Einspeisekanal 46 angeschlossen, wobei der Einspeisekanal 46 an den Verteilungsquerkanal 38 angeschlossen und sich von diesem auf den Freiflächenrichtkanal 18 gerichtet komponentenmäßig nach vorn und komponentenmäßig nach unten erstreckt. Der Spanflächenrichtkanal 28 ist durch Einspeisekanäle 46a und 47 an den Verteilungsquerkanal 38 angeschlossen.

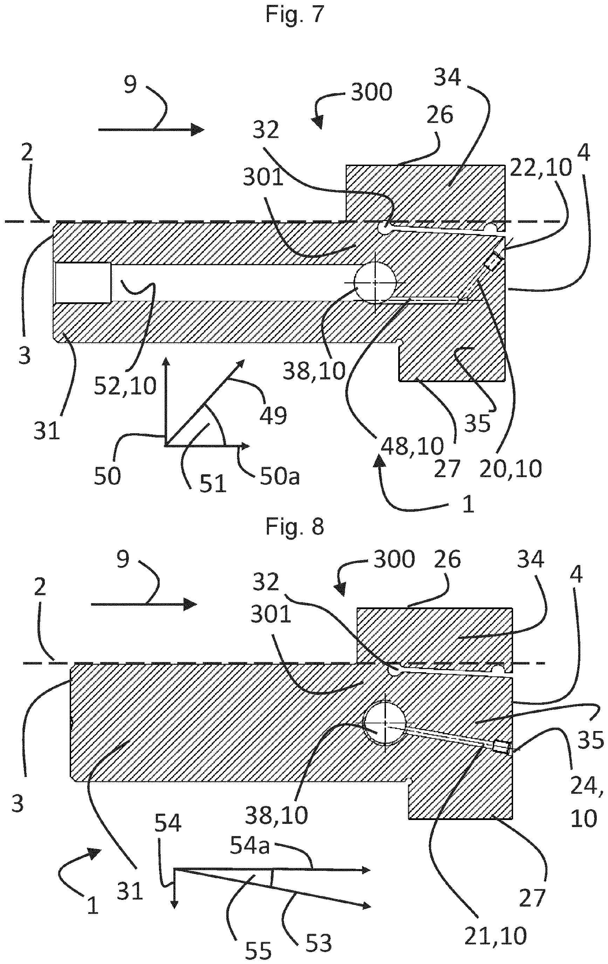

Fig. 7 stellt einen quer zur Stirnschneidkante 7 orientierten Querschnitt durch das Zerspanungsstechwerkzeug 1 gemäß der Schnittlinie D-D gemäß Fig. 2 dar.

Fig. 7 zeigt, dass der Spülungskanal 20 zum komponentenmäßig nach vorn und komponentenmäßig nach oben gerichteten Flüssigkeitsaustritt erstreckend und durch die Spülungsöffnung 22 geöffnet ist, so dass der Spülungskanal 20 in dem Querschnitt von Fig. 7 eine Strömungsaustrittsrichtung 49 definiert, die eine Komponente 50 hat, die quer zur Stechachse 2 nach oben zeigt, und eine Komponente 50a hat, die an der Richtung 9 ausgerichtet dementsprechend nach vorn zeigt.

Die Strömungsaustrittsrichtung 49 bildet in dem Querschnitt von Fig. 7 mit der Stechachse 2 einen aufseiten der Oberseite 26 bemessenen Spülungswinkel 51, der kleiner als 90° und größer als 0° ist. Die Gefälle, unter denen sich die Spülungskanäle 20 und 15 erstrecken, sind wegen der zueinander entgegengesetzten Strömungsrichtungskomponenten 40 und 50 zueinander gegenläufig.

Fig. 7 zeigt ferner, dass sich in dem Schaft 31 ein Hauptkanal 52 längs der Stechachse 2 erstreckt und an den Verteilungsquerkanal 38 angeschlossen ist.

Fig. 7 zeigt außerdem, dass der Einspeisekanal 52 rückseitig aus dem Schaft 3 austritt.

Fig. 8 stellt einen quer zur Stirnschneidkante 7 orientierten Querschnitt durch das Zerspanungsstechwerkzeug 1 gemäß der Schnittlinie E-E gemäß Fig. 2 dar.

Fig. 8 zeigt, dass der Spülungskanal 21 zum komponentenmäßig nach vorn und komponentenmäßig nach unten gerichteten Flüssigkeitsaustritt erstreckend und durch die Spülungsöffnung 24 geöffnet ist, so dass der Spülungskanal 21 in dem Querschnitt von Fig. 8 eine Strömungsaustrittsrichtung 53 definiert, die eine Komponente 54 hat, die quer zur Stechachse 2 nach unten zeigt, und eine Komponente 54a hat, die an der Richtung 9 ausgerichtet dementsprechend nach vorn zeigt.

Die Strömungsaustrittsrichtung 53 bildet in dem Querschnitt von Fig. 8 mit der Stechachse 2 einen aufseiten der Unterseite 27 bemessenen Spülungswinkel 55, der kleiner als 90° und größer als 0° ist, so dass die Gefälle, unter denen sich die Spülungskanäle 20 und 21 erstrecken, zueinander verschieden und wegen der zueinander entgegengesetzten Strömungsrichtungskomponenten 50 und 55 zueinander auch gegenläufig sind.

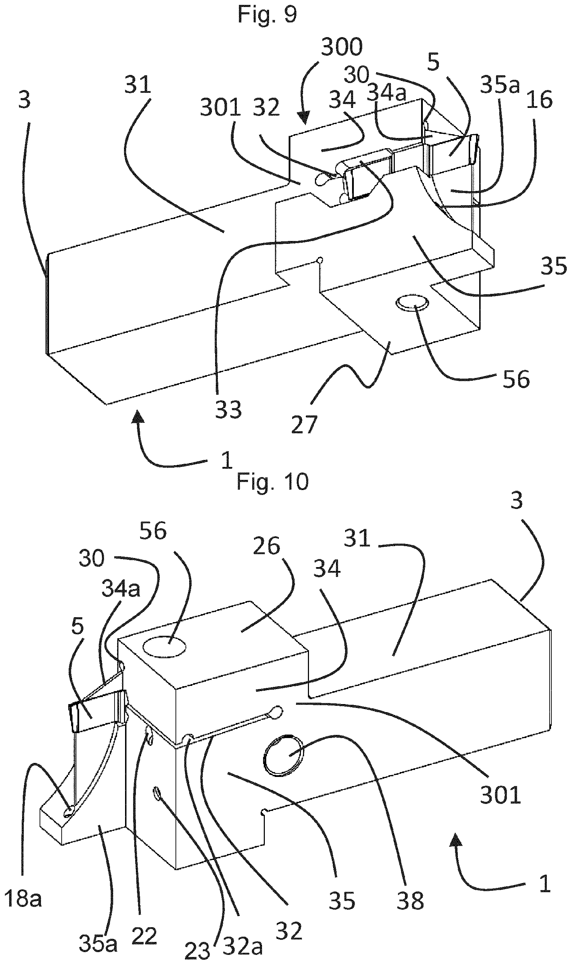

Fig. 9 und Fig. 10 zeigen jeweils eine perspektive Darstellung des Zerspanungsstechwerkzeugs 1 von schräg unten beziehungsweise von schräg oben. Fig. 9 zeigt, dass in die Unterseite 27 eine sich von unten nach oben erstreckende Gewindebohrung 56 zum Einschrauben einer Schraube mündet, wobei durch ein Festdrehen der Schraube der Klemmspalt 32 verengt und so verengt arretierbar ist und wird, und Fig. 10, dass die Gewindebohrung 56 in der Oberseite 26 ebenfalls mündet, wobei die Spülungskanäle 11, 15, 20 und 21 jeweils außerhalb der Gewindebohrung 56 angeordnet sind.

In Fig. 10 ist besonders gut zu erkennen, dass der Klemmspalt 32 aufseiten der Spülungsöffnungen 22 und 23 einen Aufhebelabschnitt 32a aufweist, und dass der Verteilungsquerkanal 38 seitlich aus dem Grundkörper 3 austritt.

Fig. 11 stellt die Stechplatte 5 in Alleinstellung und in perspektivischer Darstellung von schräg oben dar. Fig. 11 macht deutlich, dass dem Schneidenbereich 6 hinten gegenüberliegend ein analog ausgebildeter Schneidenbereich 57 zugeordnet ist, so dass die Stechplatte 6 indexierbar ausgebildet ist, und dass die Stechplatte 5, in Zusammenschau mit Fig. 1, entlang der Stechachse 2 von einer V-förmigen Nut 58 bis an die Schneidenbereiche 6 und 57 heran durchzogen ist und zwischen den Schneidenbereichen 6 und 57 längs der Stirnschneidkante 7 gegenüber den Schneidenbereichen 6 und 57 einen seitlich verdickten Kontaktbereich 59 aufweist, der für einen stabilen Kontakt in der Aufnahmetasche 33 sorgt, wobei die Stechplatte 5 durch den Klemmteilvorsprung 34a im Bereich zwischen der Spanfläche 29 und dem Kontaktbereich 59 kontaktiert wird.

Fig. 12 stellt den Schneidenbereich 6 in Blickrichtung von oben nach unten dar und zeigt im Detail, dass dem Schneidenbereich 6 die Spanfläche 29 zugeordnet ist und dass der Schneidenbereich 6 zwei verrundete Schneidecken 60 aufweist, durch welche die Nebenschneiden 8 jeweils an die Stirnschneidkante 7 angeschlossen und nach hinten, also entgegen der Richtung 9 erstreckt sind. Fig. 12 zeigt ferner, dass der Schneidenbereich 6 längs der Stirnschneidkante 7 gegenüber einen an den Schneidenbereich 6 anschließenden Bereich 61 seitlich verdickt ist, so dass ein seitlicher Nutwandkontakt der Stechplatte 5 beim Einstechen außerhalb des Schneidenbereichs 6 vermieden werden kann.

Fig. 12 zeigt ferner, dass die Stirnschneidkante 7 zwei seitlich äußerste Punkte 60a und 60b hat, an welche sie mit den Schneidecken 60 verbunden ist. Die Punkte 60a und 60b sind mit einer Stirnschneidkantenlinie 60c, die nur aus Gründen der besseren Übersichtlichkeit unverbunden in Fig. 12 dargestellt ist, verbindbar. Die Spülungskanäle 11, 15, 20 und 21 sind bei einer detaillierten Betrachtung jeweils quer zur Stirnschneidkante 7 erstreckt, indem sie senkrecht zur Stirnschneidkantenline 60c erstreckt sind, was angesichts der nur geringfügigen Einbuchtung der Stirnschneidkante 7 bezüglich der Stirnschneidkantenlinie 60c nach hinten für den Fachmann ohnehin als "quer zur Stirnschneidkante 7" verstanden wird. Entscheidend ist vielmehr, dass die Spülungskanäle 11, 15, 20 und 21 durch ihre quer zur Stirnschneidkante 7 gegebene Erstreckung für eine Bespülung von Nuten geeignet sind, die durch ein Einstechen mit der Stechplatte 5 mit dem Schneidenbereich 6 und der Stirnschneidkante 7 voran geeignet sind. So verdeutlicht Fig. 12 auch, dass mit "längs" der Stirnschneidkante 7 bei einer detaillierten Betrachtung längs der Stirnschneidkantenlinie 60c gemeint ist.

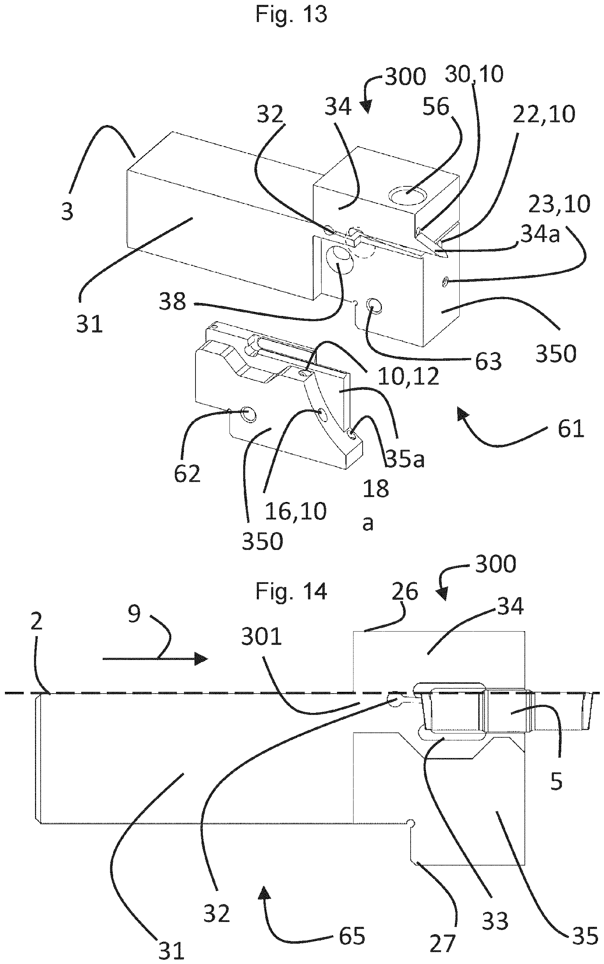

Fig. 13 zeigt ein dem Zerspanungsstechwerkzeug 1 analog ausgebildetes Zerspanungsstechwerkzeug 61 in einer Explosionsdarstellung mit dem einzigen Unterschied gegenüber dem Zerspanungsstechwerkzeug 1, dass der Grundkörper 3 zweitteilig und nicht einteilig ausgebildet ist, indem ein dem unteren Klemmteil 35 ansonsten analog ausgebildetes unteres Klemmteil 350 zweiteilig ausgebildet ist, und für den reversibel lösbaren Zusammenbau eine Befestigungsbohrung 62 und eine Befestigungsbohrung 63 aufweist.

Fig. 14 zeigt ein dem Zerspanungsstechwerkzeug 1 analog ausgebildetes Zerspanungsstechwerkzeug 65 mit dem einzigen Unterschied gegenüber dem Zerspanungsstechwerkzeug 1, dass das obere Klemmteil 34 keinen Klemmteilvorsprung 34a und dass das untere Klemmteil 35 keinen Klemmteilvorsprung 35a aufweist, so dass die Stechplatte 5 einen vorn äußersten Vorsprung des Grundkörpers 3 bildet.

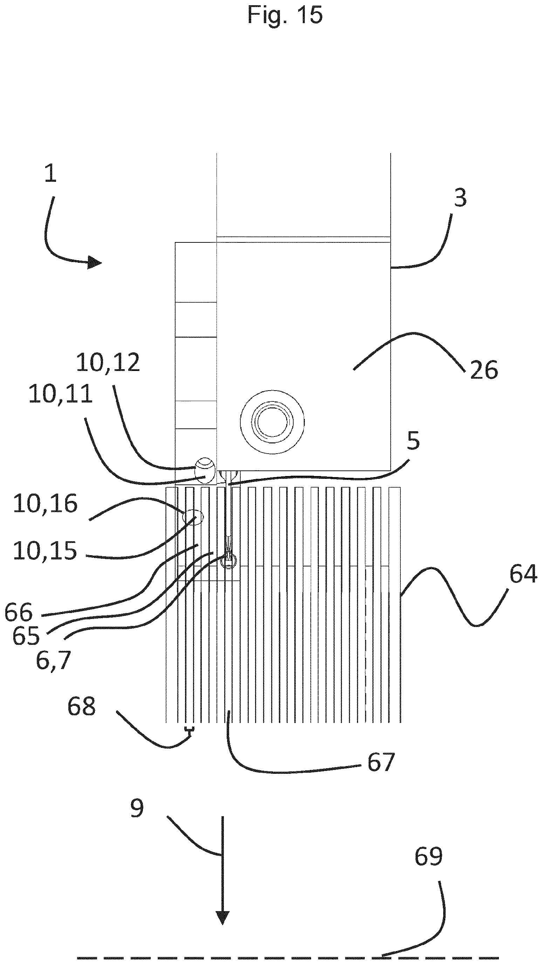

Fig. 15 zeigt eine Verwendung des Zerspanungsstechwerkzeugs 1 in Blickrichtung von oben nach unten gemäß Fig. 1 beim radialen Einstechen in eine Welle 64. Fig. 15 zeigt, dass Wellennuten 65 und 66 der Welle 64 durch den Spülungskanal 11 gespült werden können und dass zumindest die Wellennut 66 durch den Spülungskanal 15 gespült werden kann, während der Schneidenbereich 6 mit der Stirnschneidkante 7 eine Wellennut 67 in der Welle 64 erzeugt; in analogerweise werden durch die Spülungskanäle 20 und 21 rechts vom und zum Schneidenbereich 6 beabstandete Wellennuten der Welle 64 gespült.

Die Wellennuten 65 und 66 sind seitlich zum Schneidenbereich gemäß Fig. 15 nach links versetzt angeordnet. Die Wellennuten 65 und 66 sind durch einen Steg 68 zueinander beabstandet. Die Breite des Stegs 68 wird längs der Drehachse 69 bemessen. Die Welle 64 wird bezüglich der Welle 64 relativ zu dem Stechwerkzeug 1 beim Einstechen gedreht.

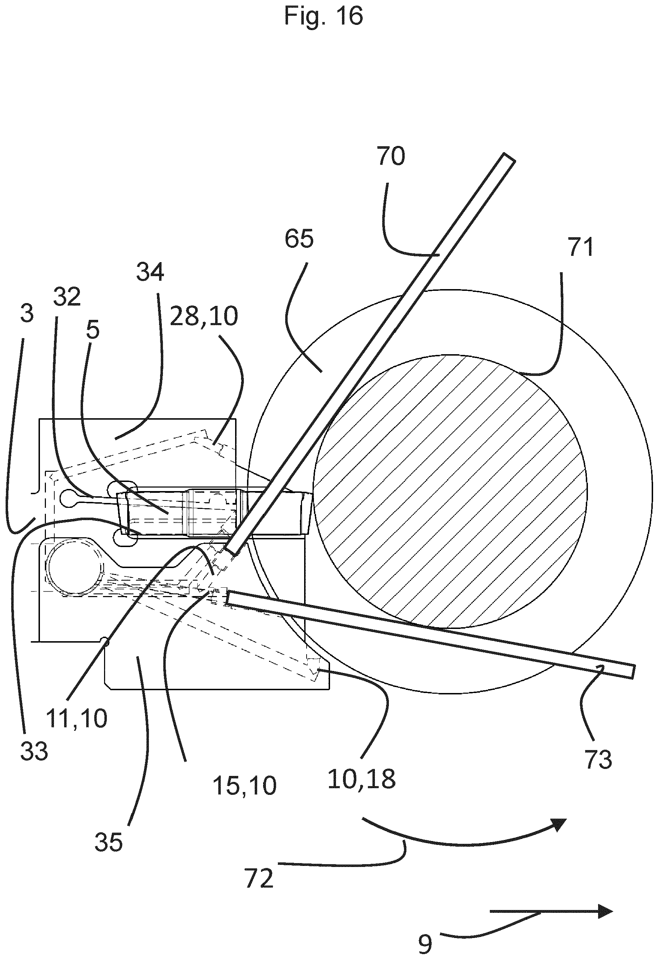

Fig. 16 zeigt die in Fig. 15 dargestellte Einstechsituation in Blickrichtung entlang der Drehachse 69 auf die bezüglich Fig. 1 linke Seite des Grundkörpers 3 und in einem Querschnitt quer zur Stirnschneidkante 7 und durch die Welle 64, wobei der Grundkörper 3 teiltransparent dargestellt wird.

Fig. 16 zeigt schematisch, dass ein aus dem Spülungskanal 11 austretender Flüssigkeitsstrom 70, also ein Flüssigkeitsaustritt, komponentenmäßig nach vorn und komponentenmäßig nach oben gerichtet ist und so tangential an einem Nutgrund 71 der Nut 65 entlang strömt, während die Welle 64 gegen den Uhrzeigersinn in die Drehrichtung 72 gedreht wird, so dass die Welle 64 am Nutgrund 71 eine dem Flüssigkeitsstrom 70 entgegengesetzte Bahngeschwindigkeit hat; aus dem Spülungskanal 20 kann ein dem Flüssigkeitsstrom 70 analog gerichteter Flüssigkeitsstrom austreten.

Fig. 16 zeigt schematisch, dass ein aus dem Spülungskanal 15 austretender Flüssigkeitsstrom 73 komponentenmäßig nach vorn und komponentenmäßig nach unten gerichtet ist und so tangential an dem Nutgrund 71 der Nut 65 entlang strömt, während die Welle 69 gegen den Uhrzeigersinn in die Drehrichtung 72 gedreht wird, so dass die Welle 64 am Nutgrund 71 eine dem Flüssigkeitsstrom 73 folgende Bahngeschwindigkeit hat; aus dem Spülungskanal 21 kann ein dem Flüssigkeitsstrom 73 analog gerichtet Flüssigkeitsstrom austreten.

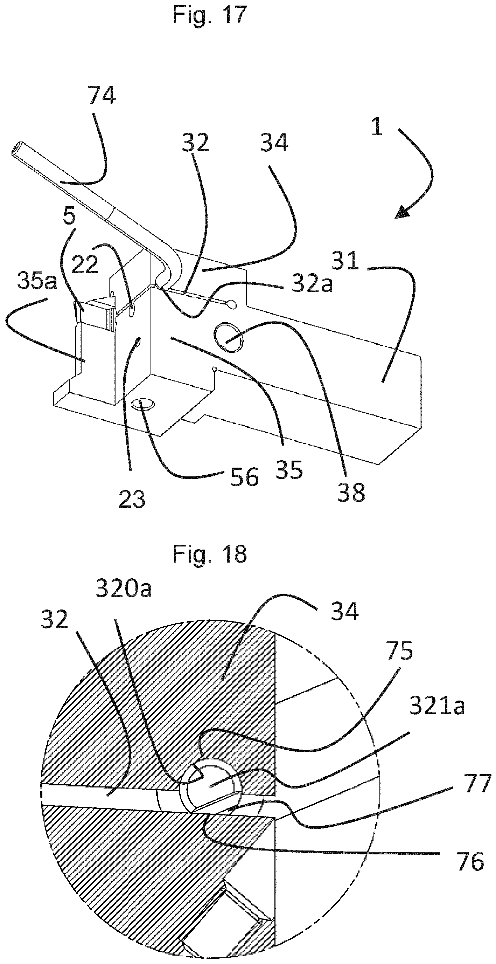

Fig. 17 zeigt das Zerspanungsstechwerkzeug 1 in perspektivischer Darstellung von schräg unten mit einem in den Aufhebelabschnitt 32a eingesteckten Aufhebelwerkzeug 74.

Fig. 18 stellt in einem Querschnitt quer zur Stirnschneidkante 7 im Bereich des Aufhebelabschnitts 32a dar, dass das Aufhebelwerkzeug 74 mit einem angefassten Abschnitt 75 in den Aufhebelabschnitt 32a und damit in den Klemmspalt 32 eingesteckt ist. Der Abschnitt 75 ist in dem Querschnitt gemäß Fig. 18 aufseiten des oberen Klemmteils 34 mit einem dem halbkreisförmigen Bereich 320a des Aufhebelabschnitts 32a aufseiten des oberen Klemmteils 34 folgenden Bereich 75 eingesteckt, wobei dem Bereich 320a ein Kreiszentrum 321a zuordenbar ist. Aufseiten des unteren Klemmteils 35 liegt das Aufhebelwerkzeug 74 mit einem gegenüber dem Bereich 320a angefasten Bereich 76 eben auf und wurde zuvor mit dem gegenüber dem Bereich 320a angefasten Bereich 77 eben in den Spalt 32 eingesteckt und folglich in die in Fig. 18 gezeigte Aufweitposition gedreht.

Weil der in dem Querschnitt gemäß Fig. 18 radial zum Kreiszentrum 321a bemessene Abstand zum Bereich 77 kürzer ist als der in dem Querschnitt gemäß Fig. 18 radial zum Kreiszentrum 321a bemessene Abstand zum Bereich 76, wird der Klemmspalt 32 durch eine Drehung des Aufhebelwerkzeugs 74 von einer Position, in welcher der Bereich 77 das untere Klemmteil 35 im Bereich des Klemmspalts 32 eben kontaktiert, in die in Fig. 18 gezeigte Position, wo der Bereich 76 das untere Klemmteil 35 im Bereich des Klemmspalts 32 eben kontaktiert, aufgeweitet.

Die vorliegende Erfindung ist nicht auf die in den Figuren 1 bis 18 gezeigten Ausführungsformen eines Zerspanungsstechwerkzeugs 1, 61,65 beschränkt. So ist es denkbar und auch möglich, dass die Kanalstruktur 10 zur Realisierung der Nutspülfunktion zumindest einen Spülungskanal aufweist, zum Beispiel den Spülungskanal 11, rechts oder links von der Stechplatte 5, und zumindest zum komponentenmäßig nach vorn gerichteten Flüssigkeitsaustritt, wobei der Spülungskanal 11 unter einem betragsmäßig anderen Spülungswinkel 45 erstreckt sein kann, aber vorzugsmäßig weiterhin komponentenmäßig auch zum nach oben gerichteten Flüssigkeitsaustritt erstreckt und geöffnet ist und jedenfalls weiterhin seitlich neben die Stechplatte 5 zielt und seitlich neben der Stechplatte 5 durch eine der Spülungsöffnung 12 analoge Spülungsöffnung geöffnet ist und vorzugsweise weiterhin gänzlich in dem Grundkörper 3, der einteilig, oder wie in Fig. 13 exemplarisch gezeigt, mehrteilig sein kann, erstreckt ist, so dass der Spülungskanal 11 weiterhin irreversibel an dem Grundkörper 3 bezüglich der Orientierung des Spülungskanals 11 fixiert ist. Die Stechplatte 5 kann auch anders als in den Figuren 1 bis 18 zeigten Ausführungsformen geklemmt gehaltert sein und/oder auch anders ausgeformt sein, solange die Stechplatte 5 zumindest eine freistehende Stirnschneidkante analog zu der Stirnschneidkante 7 aufweist.

## Patentansprüche

1. Zerspanungsstechwerkzeug (1, 61, 65) umfassend eine Stechplatte (5), einen Grundkörper (3) und eine sich zumindest abschnittsweise in dem Grundkörper (3) erstreckende Kanalstruktur (10), wobei die Stechplatte (5) an dem Grundkörper (3) gehaltert ist und einen Schneidenbereich (6) mit einer freistehenden Stirnschneidkante (7) und einer dieser zugeordneten Spanfläche (29) und stirnseitigen Freifläche (19) aufweist, wobei der Grundkörper (3) von vorn aufseiten der Freifläche (19) nach hinten, längs der Stirnschneidkante (7) seitlich und von oben aufseiten der Spanfläche (29) nach unten erstreckt ist, wobei die Kanalstruktur (10) einen Spülungskanal (11) aufweist, der seitlich neben die Stechplatte (5) zielend und zum zumindest komponentenmäßig nach vorn gerichteten Flüssigkeitsaustritt erstreckt und durch eine Spülungsöffnung (12) seitlich neben der Stechplatte (5) geöffnet ist.

2. Zerspanungsstechwerkzeug (1, 61, 65) nach Anspruch 1, wobei die
Spülungsöffnung (12) seitlich neben dem Schneidenbereich (6) von diesem unter einem Versatzabstand (13) beabstandet ist, wobei der
Versatzabstand (13) zumindest eine durch den Schneidenbereich (7) definierte Stechbreite (14) beträgt.

3. Zerspanungsstechwerkzeug (1, 61, 65) nach einem der vorhergehenden Ansprüche, wobei der Spülungskanal (11) quer zur Stirnschneidkante (7) längserstreckt ausgebildet ist.

4. Zerspanungsstechwerkzeug (1, 61, 65) nach einem der vorhergehenden Ansprüche, wobei der Spülungskanal (11, 20) zum komponentenmäßig nach vorn und komponentenmäßig nach oben gerichteten Flüssigkeitsaustritt erstreckt und durch die Spülungsöffnung (12) seitlich neben der Stechplatte (5) geöffnet ist.

5. Zerspanungsstechwerkzeug (1, 61, 65) nach einem der vorhergehenden Ansprüche, wobei die Kanalstruktur (10) einen weiteren Spülungskanal (15, 20, 21) aufweist, der neben die Stechplatte (5) zielend und zum zumindest komponentenmäßig nach vorn gerichteten Flüssigkeitsaustritt erstreckt und durch eine weitere Spülungsöffnung (16, 22, 23) seitlich neben der Stechplatte (5) geöffnet ist.

6. Zerspanungsstechwerkzeug (1, 61, 65) nach Anspruch 4 und 5, wobei der weitere Spülungskanal (15, 21) zum komponentenmäßig nach vorn und komponentenmäßig nach unten gerichteten Flüssigkeitsaustritt erstreckt und durch die weitere Spülungsöffnung (23, 16) geöffnet ist.

7. Zerspanungsstechwerkzeug (1, 61, 65) nach Anspruch 5 oder 6, wobei der Schneidenbereich (7) zwischen der Spülungsöffnung (12, 16) und der weiteren Spülungsöffnung (22, 23) angeordnet ist.

8. Zerspanungsstechwerkzeug (1, 61, 65) nach Anspruch 2 und einem der Ansprüche 5 bis 7, wobei die weitere Spülungsöffnung (16, 22, 23) seitlich neben dem Schneidenbereich (7) von diesem unter einem weiteren Versatzabstand (17, 24, 25) beabstandet ist, wobei der weitere Versatzabstand (17, 24, 25) zumindest die Stechbreite (14) beträgt.

9. Zerspanungsstechwerkzeug (1, 61, 65) nach Anspruch 8, wobei der Versatzabstand (13) und der weitere Versatzabstand 17, 24, 25) betragsmäßig verschieden sind.

10. Zerspanungsstechwerkzeug (1, 61, 65) nach einem der Ansprüche 5 bis 9, wobei die Kanalstruktur (10) einen noch weiteren Spülungskanal (15, 20, 21) aufweist, der neben die Stechplatte (5) zielend und zum komponentenmäßig nach vorn und komponentenmäßig nach oben oder unten gerichteten Flüssigkeitsaustritt erstreckt und durch eine noch weitere Spülungsöffnung (15, 20, 21) geöffnet ist.

11. Zerspanungsstechwerkzeug, wobei der Spülungskanal (11) bezüglich seiner Orientierung an dem Grundkörper (3) irreversibel fixiert.

12. Zerspanungsstechwerkzeug (1, 61, 65) nach einem der vorhergehenden Ansprüche, wobei die Kanalstruktur (10) einen Spanflächenrichtkanal (28) aufweist, der oberhalb der Spanfläche (29) angeordnet und zur zumindest bereichsweisen Spanflächenspülung erstreckt und geöffnet ist.

13. Zerspanungsstechwerkzeug (1, 61, 65) nach einem der vorhergehenden Ansprüche, wobei die Kanalstruktur (10) einen Freiflächenrichtkanal (18) aufweist, der unterhalb von der Spanfläche (29) angeordnet zur zumindest bereichsweisen Freiflächenspülung erstreckt und geöffnet ist.

14. Verwendung eines Zerspanungsstechwerkzeugs (1, 61, 65) nach einem der vorhergehenden Ansprüche zur Spülung einer seitlich neben dem Schneidenbereich (7) versetzen Wellennut (65, 66) einer Welle (64).

15. Verwendung nach Anspruch 14, wobei der Schneidenbereich (6) während der Spülung der Wellennut (65, 66) radial und relativ in die Welle (64) zur Erzeugung einer weiteren Wellennut (67) einsticht.
